# EUROPÄISCHE PATENTANMELDUNG

(11) **EP 0 961 391 A1**
(43) Veröffentlichungstag der Anmeldung: **01.12.1999**
(21) Anmeldenummer: 99109842.7
(22) Anmeldetag: 19.05.1999
(51) Int. Cl.: H02K 21/22, H02K 21/26

(54) **Dreiphasengleichstrommotor mit elektronischer Kommutierung und hoher Motorleistung**

(30) Priorität: 29.05.1998 DE 19824042
(71) Anmelder: PM DM Precision Motors Deutsche Minebea GmbH, 78549 Spaichingen (DE)
(72) Erfinder: Borsai, Peter, Dipl.-Ing., 78532 Tuttlingen (DE); Flammer, Hermann, Dipl.-Ing. (FH), 78658 Zimmern-Flözlingen (DE); Staiger, Eberhard, 78112 St. Georgen (DE)
(74) Vertreter: Riebling, Peter, Dr.-Ing.

(57) **Zusammenfassung**

Die Erfindung betrifft einen Dreiphasengleichstrommotor mit elektronischer Kommutierung und hoher Motorleistung, wobei ein einfaches oder ganzzahliges Vielfaches von vierzehn Permanentmagneten am Rückschlußring angeordnet sind, denen ein einfaches oder ganzzahliges Vielfaches von zwölf Statorpolen des Stators gegenüber gestellt sind. Der Motor wird im Grenzbereich der Sättigung betrieben und die in den Phasenwicklungen induzierte Spannung ist nahezu sinusförmig, wobei gleichzeitig ein niedriges Rastmoment vorhanden ist.

## Beschreibung

Die Erfindung betrifft einen Dreiphasenmotor mit hoher Motorleistung nach dem Oberbegriff des Patentanspruchs 1.
Derartige Dreiphasenmotoren sind in der Regel elektronisch kommutierte Gleichstrommotoren, die insbesondere für Speicherplatten-Laufwerke in Computern eingesetzt werden. Hierauf ist der Anwendungszweck des Motors nach der Erfindung jedoch nicht begrenzt. Wichtig ist jedoch, daß ein derartiger Motor wegen des geringen zur Verfügung stehenden Einbauplatzes ein geringes Bauvolumen bei gleichzeitig hoher Leistung aufweist.

Bei den bisher bekannten elektronisch kommutierten Gleichstrommotoren mit z. B. drei Phasen für Speicherplatten-Laufwerke besteht der Nachteil, daß sie ein relativ hohes Rastmoment aufweisen, sowie eine relativ niedrige Motorleistung. Dies liegt bei den bekannten Motoren darin, daß die Leistung der verwendeten Permanentmagnete nicht vollständig ausgenutzt werden kann und ferner, daß ein Betrieb des Statorpaketes im Grenzbereich der Sättigung mit Nachteilen verbunden ist.

Der Erfindung liegt deshalb die Aufgabe zugrunde einen Dreiphasengleichstrommotor mit elektronischer Kommutierung so weiterzubilden, daß er bei relativ gleichen (miniaturisierten) Abmessungen eine höhere Motorleistung, ein höheres Anlaufmoment und ein niedrigeres Rastmoment erreicht.

Zur Lösung der gestellten Aufgabe ist die Erfindung durch die technische Lehre des Anspruches 1 gekennzeichnet.

Wesentliches Merkmal der Erfindung ist, daß zur Erreichung eines geringen Rastmomentes vierzehn Permanentmagnetpole (oder ein ganzzahliges Vielfaches) am Umfang des Rotors angeordnet sind, denen zwölf Pole (oder ein ganzzahliges Vielfaches) des Stators gegenüber gestellt sind, und daß gleichzeitig eine hohe Motorleistung dadurch erzielt wird, daß die Permanentmagnete höchstmöglich aufmagnetisiert sind und daß das Statorpaket im Grenzbereich der Sättigung arbeitet.

Mit der gegebenen technischen Lehre ergibt sich also der wesentliche Vorteil, daß eigentlich zwei sich widersprechende Forderungen in dem erfindungsgemäßen Motor vereinigt werden. Stark aufmagnetisierte Permanentmagnete führen nämlich zu einem hohen (unerwünschten) Rastmoment, welches aber gerade bei der vorliegenden Erfindung dadurch ausgeschlossen wird, daß eben eine relativ hohe Anzahl von Permanentmagnetpolen, insbesondere vierzehn Permanentmagnetpolen einer relativ hohen Anzahl von Statorpolen (insbesondere zwölf Statorpolen) gegenüber liegen.

Selbstverständlich umfaßt die Erfindung auch ein (einfaches oder) Vielfaches des angegebenen Verhältnisses vierzehn/zwölf.

Ein weiteres wesentliches Merkmal der vorliegenden Erfindung ist, daß der Nutenraum sehr groß gehalten werden kann, um so einen hohen Kupferfüllfaktor der Wicklung zu gewährleisten. Bei herkömmlichen Motoren ist es unerwünscht, den Motor im Sättigungsbereich zu betreiben. Aus diesem Grunde muß mehr ferromagnetisches Material im Stator bereitgestellt werden, was zwangsläufig zu einer Einschränkung des für die Wicklung zur Verfügung stehenden Nutenraumes führt.

Auf diese Beschränkung ist die vorliegende Erfindung jedoch nicht angewiesen. Bei der vorliegenden Erfindung kann der Motor im Grenzbereich der Sättigung betrieben werden. Wird nämlich ein herkömmlicher Motor im Grenzbereich der Sättigung betrieben, dann werden neben der bereits erwähnten Erhöhung des Rastmoments, die in den Phasenwicklungen des Statorpakets induzierten Spannungen stufenförmig und weichen erheblich von einer idealen Sinuskurve ab, was unerwünscht ist und zu einem verschlechterten Anlaufverhalten das Motors führt.

Dies wird bei der vorliegenden Erfindung vermieden, weil bei der vorliegenden Erfindung der Motor im Grenzbereich der Sättigung betrieben wird und trotzdem die in den Phasenwicklungen induzierten Spannungen sinusförmig sind. Es wird also eine treppenförmig induzierte Phasenspannung dadurch vermieden, daß die Addition einer hohen Zahl phasenverschobener Einzelspannungen zu einer sinusfömigen Phasenspannung führt.
Die Addition derartig phasenverschobener Einzelspannungen zu einer sinusförmigen Phasenspannung ergibt sich optimal nur bei dem vorgeschlagenen Verhältnis 14: 12 oder einem ganzzahligen Vielfachen daraus.

Es hat sich nämlich herausgestellt, daß andere Verhältnisse, z.B. 12 Magnetpole zu 9 Ferromagnetpolen oder auch ein Verhältnis von 8 : 12 nicht zu den Vorteilen der Erfindung führen, denn bei diesen Verhältniszahlen liegt entweder ein höheres Rastmoment bei maximaler Aufmagnetisierung der Permanentmagnete vor und/oder die induzierte Phasenspannung ist treppenförmig bei Betrieb des Blechpaketes im Grenzbereich der Sättigung.

Selbst wenn also einzelne Spannungen, die in einzelnen Statorwicklungen induziert werden, treppenförmig oder stufenförmig sind, kommt es dennoch wegen der phasenverschobenen Addition dieser Spannungen zu einer sinusförmigen Phasenspannung, welche das Anlaufverhalten des Motors in günstiger Weise verbessert.

Ein weiteres Merkmal der Erfindung ist eine sehr geringe Induktivität, die zum einen durch den Betrieb des Statorpakets im Grenzbereich der Sättigung erreicht wird, und zum andern aufgrund der hohen Aufmagnetisierung des Permanentmagneten kann auch die Windungsanzahl der Wicklung recht klein gehalten werden.

So konnte z.B. die Induktivität eines erfindungsgemäßen Motors um etwa 33 % gegenüber der Induktivität eines vergleichbaren Motors mit 12 Permanentpolen und 9 Ferromagnetpolen bei gleicher Baugröße und Leistung reduziert werden.

Ein weiteres Merkmal der Erfindung ist ein geringes Massenträgheitsmoment des Rotors, das dadurch erreicht wird, daß aufgrund der Verwendung der hohen Anzahl von Magnetpolen der Magnetrückschluß sehr dünn ausgeführt sein kann und außerdem durch die hohe Aufmagnetisierung des Permanentmagneten dieser selbst sehr dünn ausgeführt werden kann.

Bei Verwendung eines bekannten Motors mit 8 Magnetpolen im Vergleich zu einem Motor nach der Erfindung mit 14 Magnetpolen reduziert sich die Dicke des Rückschlußringes um das Verhältnis 8 : 14.

Ebenso wird ein geringes Massenträgheitsmoment auch dann erreicht, wenn das Statorpaket mittels Kommutator die Rolle des Rotors übernimmt, da das Paket im Grenzbereich der Sättigung arbeitet und deshalb nur eine geringe Masse des ferromagnetischen Materials notwendig ist. Außerdem wird in dieser Ausführung das Massenträgheitsmoment auch durch die bereits erwähnte geringe Kupfermenge der Wicklung reduziert.

Bei Verwendung eines Silicium-Eisen-Materials des Stators (Statorblechpaket) liegt der Grenzbereich der Sättigung bei etwa 1,8 Tesla. Aufgrund dieser hohen Sättigung können die Stege im Statorpaket kleiner dimensioniert werden, wodurch das Gewicht verringert wird und mehr Raum für die Wicklung geschaffen wird.

Daraus ergibt sich also auch das geringe Gewicht eines solchen Motors, das aus letztaufgeführten Gründen erreicht wird.

Ein weiteres Merkmal der Erfindung sind die geringen Kosten, die neben der allgemeinen Massenreduzierung vor allem dadurch erreicht werden, daß durch die hohe Aufmagnetisierung der Permanentmagnete weniger Magnetmaterial benötigt wird.

Allein die Einsparung an Magnetwerkstoff führt zu einer Kostenreduktion von 15 % gegenüber einem vergleichbaren 12 : 9 Motor, wobei die Gewichtsersparnis (z.B. durch einen dünneren Rückschlußring) noch nicht berücksichtigt ist

In einer weiteren Ausführungsform des Dreiphasenmotors (als Außenläufer) rotieren statt dem Rückschlußring mit Permanentmagneten des Rotors elektromagnetische Pole um die Statorpole des Stators.

Mit dieser Variante ist gemeint, daß anstelle des Permantmagnete aufweisenden Rotors nun elektromagnetische Pole verwendet werden. Es sind dann 14 elektromagnetische Pole in Gegenüberstellung zu 12 ferromagnetischen Polen des Stators (oder ein ganzzahliges Vielfaches aus dieser Verhältniszahl) vorhanden. Die elektromagnetischen Pole sind hierbei elektrisch bestromt, wobei die Bestromung regelbar ist.

Eine andere Variante bildet ein Dreiphasenmotor als Innenläufer, bei dem der Rotor mit Rückschlußring und Magnetpolen im Inneren des Motors und der Stator mit den Statorpolen außen angeordnet ist.

Es ist auch vorgesehen, daß in einer weiteren Ausführungsform des Dreiphasenmotors der Rotor außen am Motor in Ruhe bleibt und die Funktion eines Stators hat, während der Stator die Funktion eines Rotors übernimmt, sich dreht und über einen Kommutator mit Energie versorgt wird.

Hierbei handelt es sich um eine Funktionsumkehr von Rotor und Stator. Der Rotor übernimmt hierbei die Aufgabe des Stators und umgekehrt der Stator die Aufgabe des Rotors. Hier würde sich dann das Blechpaket mit seinen 12 Polen drehen, während der Teil mit den 14 Permanentmagneten feststeht. Auch hier gilt das Verhältnis von 12 : 14 oder einem ganzzahligen Vielfachen hieraus als erfindungswesentlich.

Ebenfalls ist vorgesehen, daß der Luftspalt zwischen den Permanentmagneten und dem Stator sowohl radial als auch axial angeordnet sein kann, oder aber in beiden Richtungen, nämlich radial und axial ausgebildet sein kann.

Ebenfalls ist die Möglichkeit vorgesehen, daß der Magnetring, der die Magnetpole enthält, und der Rückschlußring einstückig ausgeführt werden. Der Magnetring wird hierbei einfach zur Ausbildung der Magnetpole stückweise magnetisiert und ein Eisenrückschlußring entfällt.

Zur Verbilligung der Fertigung kann vorgesehen sein, daß der Magnetring des Motors nicht einstückig ausgebildet ist, sondern aus Teilsegmenten besteht, die über Verbindungselemente miteinander gekoppelt sind.

Die Vorteile dieses Elektromotors wirken sich auch bei einer elektrischen Maschine im Generatorbetrieb gleichermaßen positiv aus. Es wird demnach im Generatorbetrieb eine optimale sinusförmige Ausgangsspannung bei geringem Rastmoment erhalten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: schematisiert eine Draufsicht auf den Motor;
Figur 2: das Wicklungsschema der Statorwicklung;
Figur 3: die in den Statorwicklungen induzierten Spannungen über den elektrischen Drehwinkel gesehen (bei Drehrichtung des Rotors wie in Figur 2 eingezeichnet);
Figur 4: die Sternschaltung der Wicklungen nach Figur 2;
Figur 5: eine Dreiecksschaltung der Wicklungen.

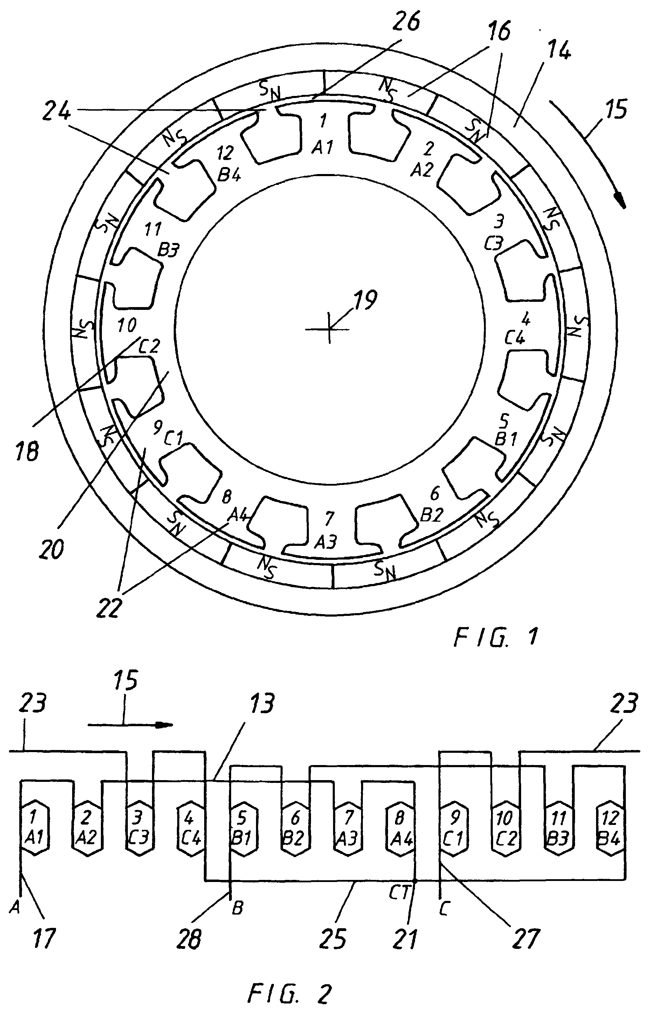

In Figur 1 ist allgemein eine vierzehn magnetpolige Maschine mit zwölf ferromagnetischen Statorpolen dargestellt.

Der Stator 18 weist einen inneren, umlaufenden und in sich geschlossenen ringförmigen, ferromagnetischen Rückschluß 20 auf. Am Stator 18 sind werkstoffeinstückig insgesamt zwölf ferromagnetische Statorpole 1- 12 angeordnet. Sie sind in an sich bekannter Weise am Außenumfang hammerförmig erweitert. Zwischen diesen Statorpolen und den kreisförmig angeordneten Magnetpolen 16 bildet sich in radialer Richtung ein Luftspalt 26 aus.
Mit den Buchstaben A1 - A4; B1 - B4, C1 - C4 sind die verschiedenen einander zugeordneten Statorwicklungen bezeichnet.

Hierbei ist wesentlich, daß jeweils zwei Statorwicklungen A1, A2 einer Phase nebeneinanderliegend angeordnet sind und symmetrisch zum Drehzentrum gegenüberliegend die zugeordneten anderen zwei Statorwicklungen A3, A4 der selben Phase angeordnet sind.

Gleiche Verhältnisse gelten für die jeweils paarweise angeordneten Statorwicklungen B1, B2 im Verhältnis zu den gegenüberliegenden Statorwicklungen B3, B4. Gleiches gilt auch für die paarweise angeordneten Statorwicklungen C1, C2, denen die paarweise angeordneten Statorwicklungen C3, C4 gegenüberliegen.

Permanent magnetische Magnetpole 16 sind insgesamt vierzehn Stück vorhanden, die jeweils abwechselnd gegensätzlich gepolt sind. Das heißt, einem in radialer Richtung in N-S Sinn polarisierten Magnetpol ist jeweils benachbart ein im gegensätzlichen Sinn S-N magnetisierter Magnetpol benachbart.

Alle Magnetpole 16 sind hierbei in dem außenliegenden Rückschlußring 14 angeordnet, der aus einem ferromagnetischen Material besteht.

Im gezeigten Ausführungsbeispiel ist eine mit 15 bezeichnete Drehrichtung des Rotors (14, 16) angegeben.

Durch die Vielzahl der verwendeten Magnetpole 16 kann der Rückschlußring 14 sehr dünn ausgeführt werden, was mit dem Vorteil verbunden ist, daß hierdurch mehr Raum für den eigentlichen Motor bei gleichen Motorabmessungen zur Verfügung steht.

Die hammerförmig ausgebildeten Statorpole 1-12 sind allgemein mit dem Bezugszeichen 22 bezeichnet.

Die Figur 2 zeigt die Verschaltung der einzelnen Statorwicklungen, wobei jeweils eine zusammengehörende Phasenwicklung mit jeweils einem Buchstaben A, B oder C bezeichnet ist.

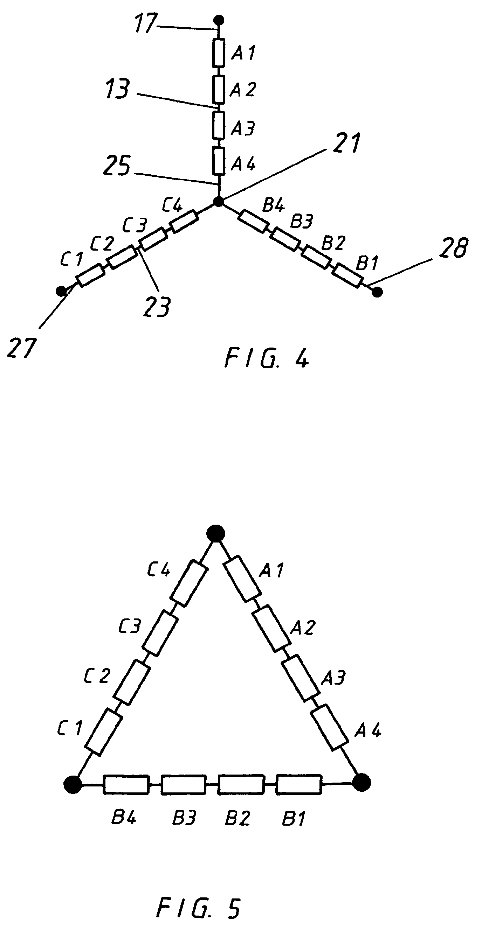

Die Figur 2 zeigt, daß beispielsweise die beiden Statorwicklungen A1 und A2 ausgehend von der Leitung 17 in Serie geschaltet sind und gegensinnig gewickelt sind, während die anderen Statorwicklungen A3, A4 über die Leitung 13 mit den vorher genannten Statorwicklungen A1 und A2 verbunden sind und A3 genau gleich wie A2 gewickelt ist, während A4 den gleichen Wickelsinn wie A1 hat. Die Leitung 25 stellt die Verbindung der in Serie geschalteten Statorwicklungen A1 - A4 der Phase A zum Verbindungspunkt 21 her, in welchem die drei Phasenwicklungen A, B und C miteinander verschaltet sind. (siehe auch Figur 4).

Die Wicklungen der Phasen A, B und C sind alle gleich, so daß es ausreicht, lediglich eine einzige Phasenwicklung zu beschreiben, weil alle anderen genau gleich ausgebildet sind. Sie sind nur lediglich am Umfang des Stators um 120° mechanisch zueinander versetzt. Bei Phase C sind die Statorwicklungen C1 und C2 über die Leitung 23 mit den Statorwicklungen C3 und C4 verbunden.

Es bedarf also nicht mehr des Eingehens auf die Verschaltung der Statorwicklungen B1-B4 und C1-C4, weil diese Verschaltung genau gleich ausgebildet ist wie die Verschaltung der Statorwicklungen A1-A4.

Das Wicklungsschema nach Figur 2 zeigt eine Sternschaltung, wie sie schematisiert auch noch in Figur 4 dargestellt ist.

Die Figur zeigt - wie erwähnt - die Sternschaltung der Phasenwicklungen A, B und C, bestehend aus den Statorwicklungen A1-A4; B1-B4 und C1-C4.

Selbstverständlich ist die Erfindung hierauf nicht beschränkt; es kann auch eine Dreiecksschaltung vorgesehen sein, die beispielsweise in Figur 5 dargestellt ist. Für diese Schaltung gelten sinngemäß die gleichen Erläuterungen, wie sie für die Sternschaltung gegeben wurden.

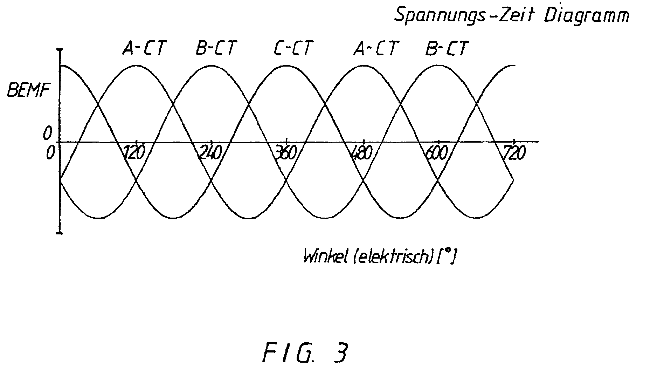

Aus Figur 3 gehen weitere Einzelheiten der Schaltung hervor, da in dieser ein Spannungs-Zeit-Diagramm dargestellt ist, das die in den Phasenwicklungen induzierte Spannungen über den elektrischen Drehwinkel darstellt. Dieses Spannungs-Zeit-Diagramm ist für die in Figur 1 und Figur 2 eingezeichnete Drehrichtung 15 gültig.

Mit dem Begriff CT ist jeweils der Sternpunkt (Verbindungpunkt 21) gemeint, der in Figur 4 und Figur 2 dargestellt ist. Es ist also jeweils die Spannung über die jeweilige Phase gegenüber diesem Sternpunkt dargestellt.

Wie in einem normalen Dreiphasenmotor üblich, sind die in den drei Phasenwicklungen A, B und C induzierten Spannungen um 120° zueinander versetzt und haben jeweils sinusförmigen Verlauf, was bereits schon im allgemeinen Beschreibungsteil erläutert wurde. Durch die Vielzahl der vorhandenen Statorpole 1 bis 12 in Verbindung mit insgesamt vierzehn Magnetpolen 16 ergibt sich, daß jede einzelne induzierte Phasenspannung A-C, T, B-CT und C-CT recht nahe an eine ideale Sinuskurve herankommt. Dies wird erfindungsgemäß dadurch erreicht, daß z. B. die Spannung A-CT von den Statorwicklungen A1-A4 erzeugt wird, von denen jeweils zwei benachbarte Statorwicklungen (A1 und A2 bzw. A3 und A4) um 30° mechanisch versetzt sind und gegensinnig gewickelt sind.
Werden nun durch die Serienschaltung der Statorwicklungen A1-A4 die in diesen Wicklungen induzierten Teilspannungen addiert, kommt es zu der vorher genannten gut ausgebildeten Sinusform.

Die in den Statorwicklungen A1 und A3 induzierten Teilspannungen sind gleichphasig, ebenso gilt dies für die in den Statorwicklungen A2 und A4 induzierten Teilspannungen.

Die gleichen Erläuterungen gelten für die Phasen B und C.
Da die Spannungen A-CT, B-CT und C-CT sinusförmig sind, sind auch die Spannungen zwischen den Phasen A-B, B-C und C-A sinusförmig. Dies ist vor allem bei bipolarem und dreiphasigem Betrieb von Bedeutung.

Es soll noch als weiterer Vorteil festgestellt werden, daß durch die gegenüberliegende Anordnung bezüglich des Drehzentrums der Wicklungen A1 und A2 im Vergleich zu A3 und A4 eine Symmetrierung der Drehmomente erfolgt, weil eben diese Wicklungen genau gegenüberliegend angeordnet sind.

Als typischer Wert eines bevorzugten Ausführungsbeispiels wird für die im Rahmen der Erfindung angestrebte, maximale Aufmagnetisierung der Permanentmagnete (Hersteller: NMB, Typ MR12) ein Wert von 760 milliTesla vorgeschlagen. Dieser Wert ist vom Material der Permanentmagnete abhängig; er wurde hier für einen kunststoffgebundenen Neodym-Eisen-Bor-Magneten angegeben. Mit der erfindungsgemäß vorgeschlagenen Verhältniszahl von 14 Permanentmagneten zu 12 Statorpolen wurde eine Annäherung an die mathematische Sinuskurve der induzierten Phasenspannungen von besser als 2 % erreicht. Bei der Verwendung eines ganzzahligen Vielfachen dieser Verhältniszahl kann dieser Annäherungsfaktor von 2 % noch weit unterschritten werden.

### Zeichnungslegende

- A: Phase
- B: Phase
- C: Phase
- A1: Statorwicklung
- A2: Statorwicklung
- A3: Statorwicklung
- A4: Statorwicklung
- B1: Statorwicklung
- B2: Statorwicklung
- B3: Statorwicklung
- B4: Statorwicklung
- C1: Statorwicklung
- C2: Statorwicklung
- C3: Statorwicklung
- C4: Statorwicklung
- 1: Statorpol
- 2: Statorpol
- 3: Statorpol
- 4: Statorpol
- 5: Statorpol
- 6: Statorpol
- 7: Statorpol
- 8: Statorpol
- 9: Statorpol
- 10: Statorpol
- 11: Statorpol
- 12: Statorpol
- 13: Leitung
- 14: Rückschlußring
- 15: Drehrichtung
- 16: Magnetpole
- 17: Leitung
- 18: Stator
- 19: Drehzentrum
- 20: ferromagnetischer Rückschluß
- 21: Verbindungspunkt(CT)
- 22: Statorpol (allgemein)
- 23: Leitung
- 24: Statornut
- 25: Leitung
- 26: Luftspalt
- 27: Leitung
- BEMF =: induzierte Spannung in der Statowicklung
- 28: Leitung

## Patentansprüche

1. Dreiphasengleichstrommotor mit elektronischer Kommutierung und hoher Motorleistung, **dadurch gekennzeichnet**, daß vierzehn oder ein ganzzahliges Vielfaches von vierzehn Permanentmagnetenpolen (16) angeordnet sind, denen zwölf oder ein ganzzahliges Vielfaches von zwölf Statorpolen (22) des Stators (18) gegenüber gestellt sind.

2. Dreiphasenmotor mit hoher Motorleistung nach Anspruch 1, **dadurch gekennzeichnet**, daß sowohl die Permanentmagnetpole (16), als auch die ferromagnetischen Statorpole (22) des Stators (18) im wesentlichen entlang eines Kreisumfangs angeordnet sind.

3. Dreiphasenmotor mit hoher Motorleistung nach einem der Ansprüche 1 - 2, **dadurch gekennzeichnet**, daß statt der Permanentmagnetpole (16) vierzehn oder ein ganzzahliges Vielfaches von vierzehn elektromagnetischen Polen um die Statorpole (22) des Stators (18) rotieren.

4. Dreiphasenmotor mit hoher Motorleistung nach einem der Ansprüche 1 - 3, **dadurch gekennzeichnet**, daß die Magnetpole (16) nicht einstückig als Magnetring ausgebildet sind, sondern aus Teilsegmenten bestehen, welche über Verbindungselemente miteinander gekoppelt sind.

5. Dreiphasenmotor mit hoher Motorleistung nach einem der Ansprüche 1 - 4, **dadurch gekennzeichnet**, daß der Rotor mit Rückschlußring (14) und Magnetpolen (16) im Inneren des Motors und der Stator (18) mit den Statorpolen (22) außen angeordnet ist.

6. Dreiphasenmotor mit hoher Motorleistung nach einem der Ansprüche 1 - 5, **dadurch gekennzeichnet,** daß der Rotor (14, 16) in Ruhe bleibt und die Funktion eines Stators hat, während der Stator (18) die Funktion eines Rotors übernimmt, sich dreht und über einen Kommutator mit Energie versorgt wird.

7. Dreiphasenmotor mit hoher Motorleistung nach einem der Ansprüche 1 - 6, **dadurch gekennzeichnet**, daß der Luftspalt (26) zwischen den Permanentmagnetpolen (16) und dem Stator (18) radial und/oder axial ausgebildet ist.

8. Dreiphasenmotor mit hoher Motorleistung nach einem der Ansprüche 1 - 7, **dadurch gekennzeichnet**, daß die Statorwicklungen (A1 - A4, B1 - B4, C1 - C4) in einer Sternschaltung oder in einer Dreieckschaltung miteinander elektrisch leitend verbunden sind.

9. Dreiphasenmotor mit hoher Motorleistung nach einem der Ansprüche 1 - 8, **dadurch gekennzeichnet**, daß der Betrieb des Motors unipolar( 1 Phase im Einsatz), bipolar (2 Phasen im Einsatz) oder dreiphasig sein kann.

10. Dreiphasenmotor mit hoher Motorleistung nach einem der Ansprüche 1 - 9, **dadurch gekennzeichnet**, daß die Permanentmagnete (16) im Bereich ihrer maximalen Remanenzinduktion aufmagnetisiert sind.

11. Dreiphasenmotor mit hoher Motorleistung nach einem der Ansprüche 1 - 10, **dadurch gekennzeichnet**, daß das ferromagnetische Statorpaket (18) im Grenzbereich der Sättigung arbeitet.

12. Dreiphasenmotor mit hoher Motorleistung nach einem der Ansprüche 1 - 11, **dadurch gekennzeichnet**, daß der für die Wicklung nutzbare Raum in den Statornuten (24) sehr groß gehalten ist, um einen hohen Kupferfüllfaktor zu gewährleisten.

13. Dreiphasenmotor mit hoher Motorleistung nach einem der Ansprüche 1 -12, **dadurch gekennzeichnet**, daß die in den Statorwicklungen (A1 - A4, B1 - B4, C1 - C4) induzierte Spannung (BEMF) im wesentlichen sinusförmig ist.

14. Dreiphasenmotor mit hoher Motorleistung nach einem der Ansprüche 1 - 13, **dadurch gekennzeichnet**, daß der Rückschlußring (14) einstückig mit den Magnetpolen (16) ausgeführt ist.

15. Dreiphasenmaschine mit hoher Leistung nach einem der Ansprüche 1 -14, **dadurch gekennzeichnet**, daß die Maschine als Generator anstelle eines Motors betrieben wird.
